# EUROPEAN PATENT APPLICATION

(11) **EP 3 985 535 A1**
(43) Date of publication of application: **20.04.2022**
(21) Application number: 20942363.1
(22) Date of filing: 30.06.2020
(51) Int. Cl.: G06F 21/56

(54) **DETECTING MALICIOUS ACTIVITY BY ANALYSING THE BEHAVIOUR OF OBJECTS IN A NON-ISOLATED ENVIRONMENT**

(30) Priority: 26.06.2020 RU 2020121186
(71) Applicant: Group IB TDS, Ltd, Moscow 121205 (RU)
(72) Inventor: PERFILYEV, Sergey Sergeevich, Lys'va, 618900 (RU); ANDREEV, Nikolay Nikolaevich, Khimki, 141410 (RU)
(74) Representative: De Vries & Metman
(86) International application number: PCT/RU2020/000319
(87) International publication number: WO 2021/262025

(57) **Abstract**

The computer-implementable method for detection of malicious activity by analysis of behavior in non-isolated environment, the method comprising: collecting information into at least one event flow using a detection module; transmitting at least one event flow to a computing device, and analyzing, using the computing device, the obtained event flow for a predetermined amount of time, wherein transmitting at least one event from the event flow to input of at least one adapter, depending on the event type, wherein at least one adapter generates its internal event; transmitting at least one internal event to at least one signature module, and checking at least one obtained internal event using at least one signature module according to preset rules, and in case of at least one internal event correspondence to the preset rules, creating at least one internal state marker; transmitting at least one internal state marker to input of a malicious activity decision module, wherein, if at least one internal state marker total weight or probability of at least one internal state marker maliciousness exceeds a preset value, detecting the malicious activity using the decision module on the basis of difference from the allowed behavior; creating a report on suspicious activity.

## Description

### FIELD

This technical solution relates to a computer field, in particular, to the computer-implementable method and system for detecting malicious activity by analysis of objects behavior in non-isolated environment.

### BACKGROUND

The prior art source RU 2 451 326 C2, 20.05.2012, discloses a method of system analysis and management executed by the system, which includes one or more computer programs or agents supplying data on modifications inside the system. These data include information related to all interactions with files and/or settings. Such types of interactions include such actions as reading or recording to system registry elements, files, and also binary module interactions, such as downloading, etc. Agents supply the collected data to the server service, which processes the obtained information for, for example, generation of web reports, warnings or for integration with other services in order to execute system management.

The prior art source US 9,245,114 B2, 26.01.2016, discloses a method for automatic detection and analysis of malwares, which includes the following steps: storing the memory baseline for the first system by the analysis system, memory baseline including the information stored in the first system volatile memory, and the first system volatile memory, providing a file to the first system by the analysis system, file execution by the analysis system in the first system using the first system operating system after storing the memory baseline, shutdown of the first system operating system by the analysis system after file execution, storing the memory card by the analysis system after the first system execution, while the first system operating system is shutting down, the memory card after execution includes the information stored in the first system volatile memory, and - the first system volatile memory after file execution. The method also includes the analysis using the memory baseline and memory card analysis system after execution, wherein the analysis comprises: defining availability of one or several processes which have been changed from the memory baseline to the memory card after execution, defining of time stamps related to one or several processes, and detecting the behavior, which indicates the attempts to hide the rootkit during operating system running; defining that the file contains a malware on the basis of the analysis; defining duration of actions executed by the malware on the basis of time stamps; and provide a malware report including a list of one or several processes, which have been changed, and a timeline.

The proposed solution is different from the solutions known in the art in that the information about host operation is collected into the event flow, which is transmitted to a computing device, and at least one event from the event flow, depending on type, enters at least one adapter, wherein at least one adapter generates its internal event. Besides, the generated internal events are transmitted to a signature module, where the internal event is checked according to the preset rules, and in case of the internal event correspondence to the preset rules the internal state marker is created. It is worth noting that a decision on malicious activity is made by a decision module based on internal state markers of the signature module: by total weight of internal state markers or probability of internal state marker harmfulness or detection of malicious activity based on difference from the allowed behavior.

### SUMMARY

Technical problem, for solving of which the claimed art is intended, is creation of computer-implementable method and system for detecting malicious activity by analysis of objects behavior in non-isolated environment, which are defined in the primary claims. Additional variants of this technique implementation are presented in the subclaims.

The technical result consists of detection of malicious activity by analysis of objects behavior in non-isolated environment.

The claimed result is achieved by implementation of the computer-implementable method for detection of malicious activity by analysis of objects behavior in non-isolated environment, the method comprising:
- collecting information into at least one event flow using a detection module;
- transmitting at least one event flow to a computing device, and analyzing, using the computing device, the obtained event flow for a predetermined amount of time, wherein
- transmitting at least one event from the event flow to input of at least one adapter, depending on the event type, wherein at least one adapter generates its internal event;
- transmitting at least one internal event to at least one signature module, and checking at least one obtained internal event using at least one signature module according to preset rules, and in case of at least one internal event correspondence to the preset rules, creating at least one internal state marker;
- transmitting at least one internal state marker to input of a malicious activity decision module, wherein, if at least one internal state marker total weight or probability of at least one internal state marker maliciousness exceeds a preset value, detecting the malicious activity using the decision module on the basis of difference from the allowed behavior;
- creating a report on suspicious activity.

In other embodiment of the proposed method at least one internal event enters a pipeline input, the pipeline stores the information, which further could be used by the signature module.

In other embodiment of the proposed method at least one marker is created on the basis of detection of a malicious activity or object in the network or end node.

In other embodiment of the proposed method at least one marker has lifetime.

In other embodiment of the proposed method all markers have different weights.

In other embodiment of the proposed method at least one internal state consists of at least of: set of flags, file paths, registry, processes, signatures, mutexes, synchronization objects, counters.

In other embodiment of the proposed method at least one internal state has lifetime.

In other embodiment of the proposed method the decision module is made as at least a linear model, a trained classifier or a neural network.

In other embodiment of the proposed method the malicious activity report comprises at least signature markers, the decision module verdict, a host information, a content of environment variables, an information about connected devices, a screenshot, a screen video during detection, a sequence of user actions, incident graph.

The claimed result is also achieved due to the system for detection of malicious activity by analysis of objects behavior in non-isolated environment, the system comprising:
- a detection module installed in a host and configured to collect information about at least one event flow and to transmit at least one event flow to a computing device;
- the computing device configured to implement the method for detecting malicious activity by analysis of objects behavior in non-isolated environment according to method described;
- a reporting module.

### DESCRIPTION OF THE DRAWINGS

Implementation of the technique will be further described in accordance with the attached drawings, which are presented to clarify the technique chief matter and by no means limit the field of the technique. The following drawings are attached to the application:
Fig. 1 illustrates the system for detecting malicious activity by analysis of objects behavior in non-isolated environment.
Fig. 2 illustrates the computer-implementable method for detecting malicious activity by analysis of objects behavior in non-isolated environment.
Fig. 3 illustrates the example of the computing device schematic diagram.

### DETAILED DESCRIPTION

Numerous implementation details intended to ensure clear understanding of this technique are listed in the detailed description of the technique implementation given next. However, it is obvious to a person skilled in the art how to use this technique as with the given implementation details as without them. In other cases, the well-known methods, procedures and components have not been described in details so as not to obscure unnecessarily the present technique.

Besides, it will be clear from the given explanation that the technique is not limited to the given implementation. Numerous possible modifications, changes, variations and replacements retaining the chief matter and form of this technique will be obvious to persons skilled in the art.

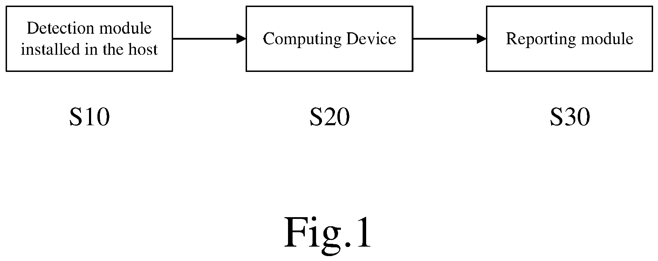

The claimed computer-implementable method for detecting malicious activity by analysis of objects behavior in non-isolated environment is implemented using the system for detecting malicious activity by analysis of objects behavior in non-isolated environment (10), which is illustrated in Fig. 1 and comprises:
- a detection module (S10) installed in the host and configured to collect information about at least one event flow and to transmit at least one event flow to a computing device;
- a computing device (S20) configured to implement a method for detecting malicious activity by analysis of objects behavior in non-isolated environment;
- a reporting module (S30).

It is worth noting that the described system 10 is completely scalable, namely, it can operate as in local as in global network.

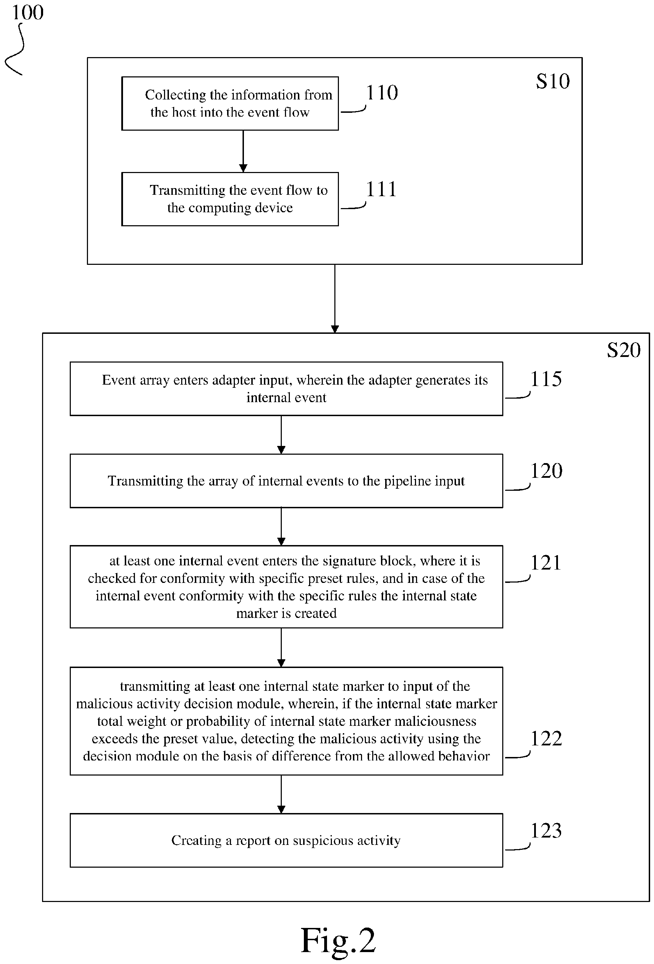

As detailed below in Fig. 2 the claimed computer-implementable method for detecting malicious activity by analysis of objects behavior in non-isolated environment (100) is implemented as follows.

Data collection software, for example, security event detection modules or security event monitors, which deal with maintaining logs and recording suspicious events in the network, are placed in the hosts.

It is worth noting that a host in this application materials means a network node. Hosts could be as physical devices - computers, servers, laptops, smartphones, tablets, game consoles, TV sets, printers, network hubs, switches, routers, unspecified devices combined by IoT (Internet of Things), etc., as hardware-software solutions enabling to arrange several network nodes at one physical device.

At step 110 collecting the information into at least one event flow using the detection module (S10); Thus, the predefined set of information about host operation is collected into the event flow.

It is worth noting that the event flow comprises at least one event, for example, file creation, file deletion, file renaming, registry key creation, recording of values into the registry, deleting of values from the registry, deleting of the registry key, process creation and termination, process thread creation and termination, log event, creating a kernel object, etc. but not limited to this list.

Ready event flow at step 111 is transmitted to the computing device (S20), where the obtained flow is analyzed for preset time. Along with the event flow the additional information, which is received in parallel to the event flow, can also be transmitted to the computing device. As an example of such information there could be a sandbox verdict about files in it or host screen video, if it is equipped with a screen, and other information.

It is worth noting that initially all events in the event flow are not trusted.

Therefore, the raw event flow received using the computing device (S20) from the host monitors is stored in the memory.

Then, at least one event from the event list is collected into an event array and then, at step 115, at least one event enters at least one adapter input, depending on the specific event type.

After event entering the adapter input the adapter generates its internal event. Thus, support of different formats of input events, i.e. invariance of events for pipelines and signatures, is ensured.

The obtained array of internal events at step 120 enters the pipeline input, where the information, which further could be used using the signature module, is stored.

The pipeline in this application materials only stores information obtained at step 111. Thus, the pipeline could be designed as a process tree, but not limiting to.

In particular, if the internal event - ProcessCreated #1 enters the pipeline input, the pipeline, having received such internal event, stores itself the process information in the process tree. Besides the pipelines can store information, which entered the computing device at step 111, for example, sandbox verdict about files, screen video and other information.

At step 121 the internal event enters the signature module, where it is checked for conformity with specific preset rules, and in case of the internal event conformity with the specific rules the internal state marker is created.

Signature module in this application materials means an entity, which in case of the internal event conformity with the specific rules, creates a marker, and a rule means the rule able to select in the known structure database the occurrences which satisfy the specified conditions.

Thus, for example, let us consider the signature wer dump and internal event ProcessCreated #2. In this particular case the signature module, having received the internal event, checks the internal event for conformity with the rule, then finds a failed process in the process tree and creates the internal state marker - "process failed".

Besides, it is worth noting that the signature module is configured to use additional pipeline information, which entered at steps 115-120, and additionally created markers.

Therefore, at step 121 at least one signature module receives an event and stores its internal state and internal data. As an example, the signature module stores BootTime in order to determine the computer rebooting time, and also creates an internal state marker, which in combination with the other internal state markers could be indicative of the malicious activity and/or malicious object detected in the network or host. Accordingly, if no such information is detected, the internal state marker is not created.

It is worth noting that the internal state could consist at least of set of flags, file paths, registry, processes, their signatures, mutexes, events (synchronization objects), networking, and also different counters. Also, the internal state has certain lifetime, which could be as infinite as finite, of preset duration.

Thus, each internal weight marker has its weight and preset lifetime. Besides, the lifetime is set based on results of tests for marker actuation, thus, when a malicious activity is detected, the periods, during which a minimum number of errors of first and second kind was detected, are determined.

Error of first kind means a situation where correct null hypothesis is discarded. For example, marker actuation on non-malicious activity.

Error of second kind means a situation where incorrect null hypothesis is accepted. For example, the marker has not actuated on malicious activity or object.

Additionally, all information stored using the signature module enters the data storage means with indication of this information lifetime. The information is deleted, if its lifetime has expired, and the internal state of the finite state automation (which is the signature module) is changed. In some cases, when the internal state is changed, a specific marker could also be additionally created.

At step 122 the internal state marker array is transmitted from the signature module to the decision module, and it is determined based on this array, whether there is a malicious activity and/or obj ect or not.

At least linear model or classifier could be used as a decision module (e.g. Random Forest or SVM, or neural network).

In the first case, if a linear model is used as a decision module, and in a certain time window there are internal state markers with total weight exceeding the threshold value, the system decides that activity of the object with above internal state markers is malicious.

In the other case, if a classifier, pretrained according to the above method steps and accepting the internal state markers as signs, is used as a decision module, when the probability exceeds 50% the system decides that activity of the object with above internal state markers is malicious. It is worth noting that, the signs could be not only the internal state markers, but also, in addition, any information from the context, additional information from the pipeline, e.g. process tree, performance counters, etc.

Another variant is when the decision module is designed as pretrained system, where finite state machines complying with the behavior requirements are stored, and then the malicious activity is determined on the basis of differences from the behavior complying with the requirements.

At step 123 there is reporting on suspicious activity using the reporting module. The reporting module can output the ready report, for example, to a disk, database, syslog, etc.

The report may comprise at least internal state markers, decision module verdict, process tree, host name, content of environment variables, information about connected devices, screenshot, screen video during detection, sequence of user actions, incident graph (the process initiating an incident with relationships-interactions, created files, created network connections, etc.).

Besides, alternatively, the reporting module may not make a report, but store each marker information in the data storage means for further statistical calculation.

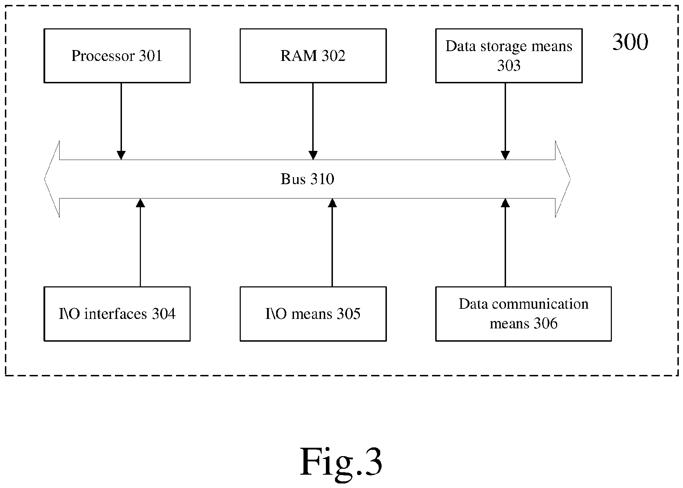

In Fig. 3 hereafter there will be presented the schematic diagram of the computing device (300), processing the data, required for embodiment of the claimed solution.

In general, the device (300) comprises such components as: one or more processors (301), at least one memory (302), data storage means (303), input/output interfaces (304), input/output means (305), networking means (306).

The device processor (301) executes main computing operations, required for functioning the device (300) or functionality of one or more of its components. The processor (301) runs the required machine-readable commands, contained in the random-access memory (302).

The memory (302), typically, is in the form of RAM and comprises the necessary program logic ensuring the required functional.

The data storage means (303) could be in the form of HDD, SSD, RAID, networked storage, flash-memory, optical drives (CD, DVD, MD, Blue-Ray disks), etc. The means (303) enables to store different information, e.g. the above-mentioned files with data sets obtained from different hosts, databases comprising records recorded in different periods for each user of time intervals, user identifiers, etc.

The interfaces (304) are the standard means for connection and operation with server side, e.g. USB, RS232, RJ45, LPT, COM, HDMI, PS/2, Lightning, FireWire, etc.

Selection of interfaces (304) depends on the specific device (300), which could be a personal computer, mainframe, server cluster, thin client, smartphone, laptop, etc.

As input/output means (305) there could be used: keyboard, joystick, display (touch-screen display), projector, touch pad, mouse, trackball, light pen, loudspeakers, microphone, etc.

Networking means (306) are selected from a device providing network data receiving and transfer and could represent, e.g. Ethernet-card, WLAN/Wi-Fi module, Bluetooth module, BLE module, NFC module IrDa, RFID module, GSM modem, etc. Making use of the means (N06)provides an arrangement of data exchange through wire or wireless data communication channel, e.g. WAN, PAN, LAN, Intranet, Internet, WLAN, WMAN or GSM.

The components of the device (300) are interconnected using the common data bus (310).

The application materials have represented the preferred embodiment of the claimed technical solution, which shall not be used as limiting the other particular embodiments, which are not beyond the claimed scope of protection and are obvious to persons skilled in the art.

## Claims

1. A computer-implementable method for detection of malicious activity by analysis of objects behavior in non-isolated environment, the method comprising:
collecting information into at least one event flow using a detection module;
transmitting at least one event flow to a computing device, and analyzing, using the computing device, the obtained event flow for a predetermined amount of time, wherein
transmitting at least one event from the event flow to input of at least one adapter, depending on the event type, wherein at least one adapter generates its internal event;
transmitting at least one internal event to at least one signature module, and checking at least one obtained internal event using at least one signature module according to preset rules, and in case of at least one internal event correspondence to the preset rules, creating at least one internal state marker;
transmitting at least one internal state marker to input of a malicious activity decision module, wherein, if at least one internal state marker total weight or probability of at least one internal state marker maliciousness exceeds a preset value, detecting the malicious activity using the decision module on the basis of difference from the allowed behavior;
assembling a report on suspicious activity.

2. The method of claim 1, wherein at least one internal event enters a pipeline input, the pipeline stores the information, which further could be used by the signature module.

3. The method of claim 1, wherein at least one marker is created on the basis of detection of a malicious activity or object in the network or at the end node.

4. The method of claim 3, wherein at least one marker has lifetime.

5. The method of claim 3, wherein all markers have different weights.

6. The method of claim 1, wherein at least one internal state consists of at least of: a set of flags, a file paths, a registry, a processes, a signatures, a mutexes, a synchronization objects, a counters.

7. The method of claim 6, wherein at least one e internal state has lifetime.

8. The method of claim 1, wherein the decision module is made as at least a linear model, a trained classifier or a neural network.

9. The method of claim 1, wherein the malicious activity report comprises at least signature markers, a decision module verdict, a host information, a content of environment variables, an information about connected devices, a screenshot, a screen video during detection, a sequence of user actions, an incident graph.

10. A system for detecting malicious activity by analysis of objects behavior in non-isolated environment, the system comprises:
a detection module installed in a host and configured to collect information about at least one event flow and to transmit at least one event flow to a computing device;
the computing device configured to implement the method for detecting malicious activity by analysis of objects behavior in non-isolated environment according to claims 1-9;
a reporting module.
